# EUROPÄISCHE PATENTSCHRIFT

(11) **EP 1 873 607 B1**
(45) Veröffentlichungstag und Bekanntmachung des Hinweises auf die Patenterteilung: **12.04.2017**
(21) Anmeldenummer: 06116418.2
(22) Anmeldetag: 30.06.2006
(51) Int. Cl.: G05D 16/10

(54) **Druckregler für Hochdruckgas**
Pressure regulator for high pressure gas
Régulateur de pression pour gaz à haute pression

(43) Veröffentlichungstag der Anmeldung: 02.01.2008
(73) Patentinhaber: LUXEMBOURG PATENT COMPANY S.A., 7440 Lintgen (LU)
(72) Erfinder: Felten, Frank, 54313 Zemmer (DE); Bermes, Karl, 54666 Irrel (DE)
(74) Vertreter: Office Freylinger

(56) Entgegenhaltungen:
- WO-A-02/097314
- WO-A2-2004/088183
- GB-A- 600 372
- GB-A- 2 024 999
- US-A- 3 945 302

## Beschreibung

### Technisches Gebiet

Die vorliegende Erfindung betrifft allgemein einen Druckregler für Hochdruckgas und insbesondere einen Druckregler für Feuerlöschanlagen mit unter Hochdruck gespeichertem Löschgas.

### Stand der Technik

Im Gegensatz zu bekannten Feuerlöschanlagen mit Halon Gas oder mit Halon - Ersatz, ist bei neueren Feuerlöschanlagen mit Inertgas das Löschmittel in den verwendeten Speichern, wie z.B. Druckgasflaschen, bei sehr hohem Speicherdruck gespeichert, welcher durchaus 200-300bar oder mehr betragen kann. Aus verschiedenen Gründen ist es allerdings nötig, den Speicherdruck auf einen wesentlich geringeren Löschdruck zu reduzieren. Einerseits werden mittels vermindertem Löschdruck die Anforderungen an die Löschmittelleitungen, welche das Löschgas zu der Gefahrenstelle leiten, reduziert. Hierdurch können gegebenenfalls vorhandene Löschmittelleitungen eines älteren Löschsystems, welche bspw. auf ca. 30bar ausgelegt sind, weiterverwendet werden. Andererseits werden die konstruktionstechnischen Maßnahmen in einem zu schützenden Raum, wie z.B. vorzusehende Entlüftungen, Fenster und Türen, bei reduziertem Löschdruck wesentlich kostengünstiger. Eine weitere technische Anforderung an Inertgas-Löschsysteme besteht darin, dass aufgrund vorgegebener Standards, das Löschmittel sehr schnell ausgetragen werden muss, beispielsweise mindestens 90% der Löschmittelmenge in 60 Sekunden. Hieraus ergibt sich, nebst der notwendigen beträchtlichen Druckreduzierung, die Notwendigkeit eines verhältnismäßig hohen Durchflusses an Löschmittel.

Es besteht daher ein Bedarf an speziell für derartige Anwendungen ausgelegten Druckreglern.

Aus der WO 2004/079678 ist ein Gasflaschenventil mit integriertem Druckregler für Hochdruckgas in einem Inertgas-Feuerlöschsystem bekannt. Der integrierte Druckregler umfasst ein Gehäuse mit einer mit einem Einlass verbundenen Hochdruckkammer und einer mit einem Auslass verbundenen Niederdruckkammer, eine zylindrische Durchgangsbohrung, welche die Hochdruckkammer mit der Niederdruckkammer verbindet und bezüglich der Hochdruckkammer verengt ist. Der Druckregler umfasst einen federbelasteten Regelkörper, welcher im Gehäuse axial verschiebbar gelagert ist und einen Kopfbereich mit größerem Querschnitt und einen Halsbereich mit kleinerem Querschnitt aufweist. An der Mündung der Durchgangsbohrung in die Niederdruckkammer bildet das Gehäuse des Druckreglers einen Ventilsitz aus, auf welchem der Kopfbereich des Regelkörpers zum Absperren des Gasstroms aufliegt. Der Regelkörper bildet somit zugleich einen Ventilkörper, welcher mit dem Ventilsitz zusammenwirkt, um die nötige Schließfunktion des Flaschenventils zu gewährleisten. Die eigentliche Regelfunktion wird dadurch erzielt, dass der Regelkörper in der Niederdruckkammer vom Ventilsitz weg, bzw. zum Ventilsitz hin verstellbar ist und somit den freien Strömungsquerschnitt in der Niederdruckkammer stromabwärts der Durchgangsbohrung einstellt. Der Druckregler gemäss der WO 2004/079678 ermöglicht zwar hohen Durchfluss bei beträchtlicher Druckreduzierung, hat allerdings den Nachteil, dass bei bestimmten Eingangsdrücken ein Ventilklappern auftreten kann, welches zum einen der Regelfunktion abträglich ist, und zum anderen die Zuverlässigkeit des Druckreglers nachteilig beeinträchtigen kann. Weiterhin wurde festgestellt, dass der im Flaschenventil integrierte Druckregler gemäss der WO 2004/079678 beim Unterschreiten eines bestimmten Drucks am Einlass (z.B. 80bar) mitunter ungewollt schlagartig öffnet und seine Regelfunktion unterhalb dieses Drucks nicht mehr wahrnehmen kann. Dieses Problem stellt sich insbesondere bei schleichendem Druckabfall in der Gasflasche durch Leckage.

Weiterhin ist aus der WO°2004/088183 ein Gasflaschenabsperrventil mit integrierter Regelfunktion bekannt, welches zur sicheren Druckreglung für Sauerstoff (O₂ eingesetzt wird. Das Gasflaschenabsperrventil zielt darauf ab, die bekannte Gefahr der Selbstentzündung des Sauerstoffs zu vermeiden. Des weiteren wird in der Veröffentlichung auf die integrierte Regelfunktion des Gasflaschenabsperrventils hingewiesen, welche es ermöglicht den Durchflussmassenstrom des aus der Gasflasche ausströmenden Gases einzustellen. Obwohl diese Regelfunktion gleichwertig für andere Gase genutzt werden kann, so ist sie jedoch stets im Gasflaschenabsperrventil einer Gasflasche integriert.

### Aufgabe der Erfindung

Eine Aufgabe der vorliegenden Erfindung ist es, ein Feuerlöschsystem mit einen verbesserten Druckregler für Hochdruckgas vorzuschlagen, bei welchem insbesondere kein Ventilklappern auftritt.

### Allgemeine Beschreibung der Erfindung

Diese Aufgabe wird gelöst durch ein Feuerlöschsystem, welches ein Löschgas unter Hochdruck in einer, mit einem Gasflaschenventil ausgestatteten, Druckgasflasche speichert. Das Feuerlöschsystem umfasst des weiteren einen Druckregler für Hochdruckgas, welcher als separates Bauteil am Auslass des Gasflaschenventils angeschlossen ist, sowie ein Gehäuse mit einer mit einem Einlass verbundenen Hochdruckkammer und einer mit einem Auslass verbundenen Niederdruckkammer. Hierbei legt das Hochdruckgas beim Einströmen durch den Einlass in die Hochdruckkammer eine Einströmrichtung fest. Eine zylindrische Durchgangsbohrung verbindet die Hochdruckkammer mit der Niederdruckkammer und ist bezüglich der Hochdruckkammer verengt. Der Druckregler umfasst weiterhin einen federbelasteten Regelkörper, welcher im Gehäuse axial verschiebbar gelagert ist und einen Kopfbereich mit größerem Querschnitt und einen Halsbereich mit kleinerem Querschnitt aufweist. Erfindungsgemäß ist der Druckregler sitzlos ausgeführt und die Regelfunktion wird dadurch erzielt, dass der Kopfbereich zwischen Hochdruckkammer und Durchgangsbohrung verstellbar ist, um den Strömungsquerschnitt im Übergangsbereich zwischen Hochdruckkammer und Durchgangsbohrung einzustellen, wobei minimaler oder kein Durchfluss durch Eintauchen des Kopfbereichs in die Durchgangsbohrung in Einströmrichtung erreicht wird.

Durch die sitzlose Ausgestaltung des Druckreglers wird unter anderem ein Ventilklappern ausgeschlossen, wodurch insbesondere eine verbesserte Regelfunktion erreicht wird. Weiterhin wird durch den erfindungsgemäßen Druckregler beim Öffnen eines vorgeschalteten Flaschenventils, d.h. bei sprungartigem Druckanstieg am Einlass, eine eventuelle Druckspitze am Auslass weitgehend unterdrückt da der Kopfbereich in Einströmrichtung in die Durchgangsbohrung eintaucht. Ein schlagartiges Öffnen wie es beim Flaschenventil gemäss der WO 2004/079678 auftreten kann ist, unabhängig vom Druck am Einlass, bei der erfindungsgemäßen Ausgestaltung ausgeschlossen. Dem erfindungsgemäßen Druckregler kommt zudem keine eigentliche Flaschenventil-Funktion zu, so dass er als modulares Bauteil an verschiedene Flaschenventilsysteme angeschlossen werden kann.

In einer bevorzugten Ausgestaltung des Feuerlöschsystems, umfasst der Druckregler einen ersten Endanschlag, welcher dem Regelkörper zwecks Begrenzung seiner Verschiebung in Einströmrichtung derart zugeordnet ist, dass der Kopfbereich zumindest teilweise in die Durchgangsbohrung eingetaucht ist bevor der Regelkörper am ersten Endanschlag anschlägt.

Vorzugsweise ist der Querschnitt des Kopfabschnitts so gewählt, dass dieser ein Eintauchen des Kopfbereichs in die Durchgangsbohrung mit geringem Radialspiel gewährleistet. In letzterer Ausgestaltung umfasst das Feuerlöschsystem vorteilhafterweise einen Druckleger, mit einer am Kopfbereich umfänglich angeordnete Radialdichtung, welche bei eingetauchtem Kopfabschnitt das Radialspiel in der Durchgangsbohrung abdichtet. Die Radialdichtung ist bevorzugt als Formdichtung ausgestaltet, welche formschlüssig in einer entsprechenden Aussparung im Kopfbereich gesichert ist.

In einer weiteren bevorzugten Ausgestaltung umfasst das Feuerlöschsystem einen Druckregler mit einer Ausgleichskammer welche axial vom Regelköper durchquert wird und eine Drosselbohrung welche die Ausgleichskammer mit der Hochdruckkammer verbindet. Diese Ausgleichskammer dient neben dem Druckausgleich des Regelkörpers bezüglich einlassseitigem Hochdruck vorzugsweise auch der Dämpfung der Bewegung des Regelkörpers. Letztere Ausgestaltung umfasst vorzugsweise weiterhin eine erste Führungsbohrung in welcher der Regelköper hinter der Niederdruckkammer radial zur Ausgleichskammer abgedichtet ist und eine abgedichtete Querschnittsfläche S1 aufweist, sowie eine zweite Führungsbohrung in welcher der Regelköper hinter der Ausgleichskammer radial zur Atmosphäre hin abgedichtet ist und eine abgedichtete Querschnittsfläche S2 aufweist, welche kleiner als S1 ist. Diese Ausgestaltung ist vorteilhaft derart ausgelegt, dass der Kopfbereich in der Durchgangsbohrung eine Querschnittsfläche S0 abdichtet, welche im wesentlichen gleich S1-S2 ist. Durch diese Anordnung ist der Regelkörper in Bezug auf den Druck in der Hochdruckkammer ausgeglichen.

In einer weiteren Ausgestaltung umfasst das Feuerlöschsystem einen Druckregler der bevorzugt eine Druckfeder, vorzugsweise eine Spiral- oder Tellerfeder umfasst, welche den Regelkörper gegen die Einströmrichtung federbelastet, sowie eine gegenüber der Hochdruckkammer und der Niederdruckkammer abgedichtete und zur Atmosphäre offene Federkammer in welcher die Druckfeder gelagert ist. In dieser Ausgestaltung sind vorzugsweise weiterhin ein zweiter Endanschlag, welcher dem Regelkörper zwecks Begrenzung seiner Verschiebung gegen die Einströmrichtung zugeordnet ist, ein zwischen der Druckfeder und dem Regelkörper angeordneter, in der Federkammer axial verschiebbar gelagerter Teller sowie ein dritter Endanschlag, welcher dem Teller zwecks Begrenzung des Hubs der Druckfeder derart zugeordnet ist, dass der Teller am dritten Endanschlag anschlägt bevor der Regelkörper am zweiten Endanschlag anschlägt, vorgesehen.

Vorzugsweise ist der Druckregler des Feuerlöschsystems so ausgeführt, dass der Übergangsbereich zwischen Hochdruckkammer und Durchgangsbohrung sich, vorzugsweise konisch, zur Durchgangsbohrung hin stetig verjüngt. Weiterhin wird bevorzugt, dass der Kopfbereich zum Halsbereich hin einen, vorzugsweise kugelabschnittsförmigen, Übergangsabschnitt aufweist, dessen Querschnitt sich zum Halsbereich hin stetig verjüngt.

Zusätzlich umfasst das Feuerlöschsystem einen Druckregler, der vorzugsweise einen Kunststoffpuffer enthält, welcher zur Dämpfung zwischen dem Regelkörper und dem ersten Endanschlag angeordnet ist. Weiterhin ist bevorzugt eine Einstellvorrichtung zur Einstellung der Vorspannung auf den federbelasteten Regelkörper am Druckregler vorgesehen.

Der Druckregler des Feuerlöschsystems ist vorteilhaft derart gestaltet, dass der Regelkörper in Einströmrichtung von einer ersten Extremposition für maximalen Durchfluss, in welcher sich der Kopfabschnitt in der Hochdruckkammer befindet, in eine zweite Extremposition für minimalen Durchfluss, in welcher der Kopfabschnitt in die Verbindungsbohrung Durchgangsbohrung eingetaucht ist, verschiebbar ist.

Der Druckregler des Feuerlöschsystems lässt sich ohne weiteres an bestehende Gasflaschenventile auslassseitig anschließen. Der Druckregler ist besonders, aber nicht ausschließlich, geeignet für ein Feuerlöschsystem mit unter Hochdruck gespeichertem Löschgas..

### Kurze Beschreibung der Figuren

Im Folgenden wird nun eine Ausgestaltung der Erfindung anhand der beiliegenden Figuren beschrieben. Diese zeigen:
Fig.1 einen Längsschnitt eines erfindungsgemäßen Druckreglers eines Feuerlöschsystem in einer Extremstellung für maximalen Durchfluss;
Fig.2 einen Längsschnitt des Druckreglers des Feuerlöschsystems gemäss Fig.1 in einer Extremstellung für minimalen oder keinen Durchfluss;
Fig.3 einen vergrößerten Ausschnitt aus Fig.1.

### Detaillierte Beschreibung einer bevorzugten Ausgestaltung der Erfindung

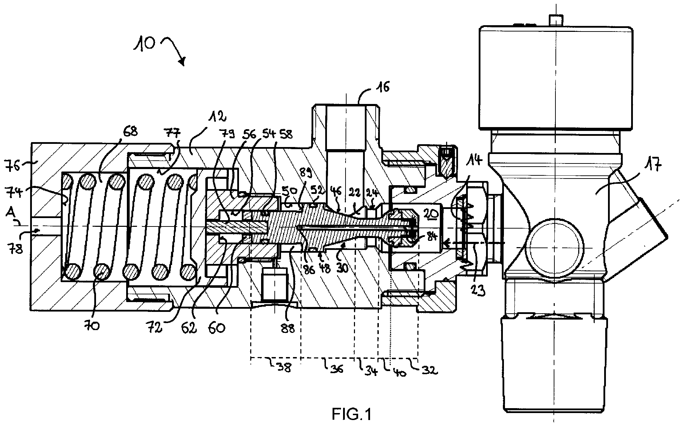

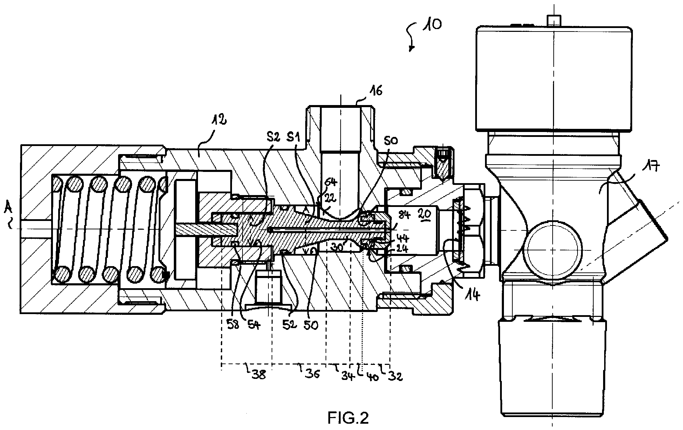

Der in Fig.1 und Fig.2 gezeigte Druckregler des Feuerlöschsystems ist allgemein mit Referenzzeichen 10 bezeichnet. Der Druckregler 10 umfasst ein Gehäuse 12 mit einem Einlass 14 und einem Auslass 16. Ein separates Flaschenventil 17 herkömmlicher Bauart ist mit dem Einlass 14 verschraubt. An das Flaschenventil 17 ist üblicherweise ein geeigneter Auslöser (nicht abgebildet) angeschlossen. Im Gehäuse 12 befinden sich eine Hochdruckkammer 20 und eine Niederdruckkammer 22, welche mit dem Einlass 14 bzw. dem Auslass 16 verbunden sind. Die Einströmrichtung des Gases in der Druckregler 10 ist mittels Pfeil 23 veranschaulicht. Eine zylindrische Durchgangsbohrung 24 verbindet die Hochdruckkammer 20 mit der Niederdruckkammer 22 und bildet eine Verengung bezüglich der Hochdruckkammer 20, d.h. die Durchgangsbohrung 24 hat eine kleinere offene Querschnittsfläche als die Hochdruckkammer 20. Die Durchgangsbohrung 24 ist ebenfalls bezüglich der Niederdruckkammer 24 verengt, so dass sich das in die Niederdruckkammer 24 einströmende Gas entspannt.

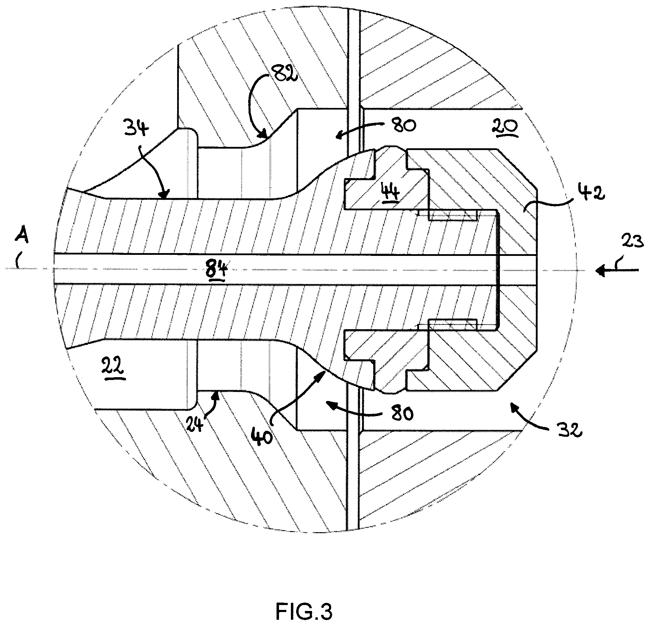

Der Druckregler 10 umfasst einen Regelkörper 30, welcher im Gehäuse 12 bezüglich der Mittelachse A der Durchgangsbohrung 24 axial verschiebbar gelagert ist. Der Regelkörper 30 ist untergliedert in einen Kopfbereich 32, einen Halsbereich 34, einen Rumpfbereich 36 und einen Fußbereich 38, wie mittels gestrichelten Hilfslinien in Fig.1 und Fig.2 gezeigt. Obwohl nicht im Querschnitt abgebildet, ist anzumerken dass der Regelkörper 30 bezüglich der Achse A im wesentlichen rotationssymmetrisch ausgebildet ist. Der Kopfbereich 32 hat einen Querschnitt welcher ein Eintauchen des Kopfbereichs 32 in die Durchgangsbohrung 24 ermöglicht, d.h. der maximale Querschnitt des Kopfbereichs 32, zumindest zur Seite des Halsbereichs 34 hin, ist kleiner als der Querschnitt der Durchgangsbohrung 24. Weiterhin ist der Querschnitt des Kopfbereichs 32 größer als der Querschnitt des Halsbereichs 34. Der Kopfbereich 32 hat eine im wesentlichen kugelförmige Gestalt und umfasst einen kugelabschnittsförmigen Übergangsabschnitt 40, dessen Querschnitt sich zum Halsbereich 34 hin stetig verjüngt (siehe Fig.3) sowie eine aufgeschraubte Kappe 42, deren abgekantete, zum Einlass 14 gerichtete Oberfläche einen niedrigen Strömungswiderstandsbeiwert gewährleistet. Die Form des Kopfbereichs 32 kann auch anders gewählt sein, solange eine stetige Verjüngung zum Halsbereich 34 hin (und vorzugsweise ein geringer Strömungswiderstand) gewährleistet ist. Der Kopfbereich 32 umfasst weiterhin eine flexible Formdichtung, welche als Radialdichtung 44 zwischen dem Übergangsabschnitt 40 und der Kappe 42 in einer entsprechenden Aussparung formschlüssig und ggf. kraftschlüssig gesichert ist. Die ringartige Formdichtung 44 ermöglicht ein vollständiges Abdichten der Durchgangsbohrung 24, bei genügend eingetauchtem Kopfbereich 32 wie in Fig.2 gezeigt. Der Querschnitt des Kopfabschnitts 32 an sich gewährleistet also ein Eintauchen in die Durchgangsbohrung 24 mit geringem Radialspiel, welches durch die Radialdichtung 44 abgedichtet wird. Prinzipiell könnte der Kopfbereich 32 auch durch Einpassen in die Durchgangsbohrung 24, d.h. ohne Radialdichtung, eine genügende Durchflussminimierung erzeugen. Letztere Ausführung ist allerdings mit höheren Anforderungen an die Fertigungstoleranzen verbunden.

Im Anschluss an den im wesentlichen zylindrischen Halsbereich 34 mit kleinerem Querschnitt besitzt der Regelkörper 30 im Rumpfbereich 36 einen sich konisch aufweitenden Stützabschnitt 46, sowie einen zylindrischen ersten Führungsabschnitt 48, welcher radial hervorsteht. Der Stützabschnitt 46 ist so gestaltet, dass ein Abbiegen des Kopfbereichs 32 von der Achse A wirksam verhindert wird. Der erste Führungsabschnitt 48 ist in einer ersten zylindrischen Führungsbohrung 50 des Gehäuses 12 verschiebbar geführt und hierein mittels einer umfänglichen O-Ring-Dichtung 52 abgedichtet. Im Anschluss an den Führungsabschnitt 48 ist der Fußbereich 38 des Regelkörpers 30 ebenfalls zylindrisch jedoch mit kleinerem Querschnitt ausgestaltet. Der Fußbereich 38 ist in einer zweiten zylindrischen Führungsbohrung 54, welche in einer eingeschraubten Buchse 56 angebracht ist, verschiebbar geführt. Der Fußbereich 38 bildet einen zweiten zylindrischen Führungsabschnitt, welcher mittels einer weiteren O-RingDichtung 58 in der Führungsbohrung 54 abgedichtet ist. Beide Führungsbohrungen 50, 54 gewährleisten eine zur Achse A koaxiale verschiebbare Lagerung des Regelkörpers 30. Weiterhin bildet der Fußbereich 38, zusammen mit einem Kunststoffpuffer 60 und dem Boden 62 der Führungsbohrung 54 in der Buchse 56, einen ersten Endanschlag zur Begrenzung der Verschiebung des Regelkörpers 30 in Einströmrichtung 23, d.h. in Schließrichtung des Druckreglers 10 (siehe Fig.2). Ein zweiter Endanschlag zur Begrenzung der Verschiebung des Regelkörpers 30 in Öffnungsrichtung wird von einem im Gehäuse 12, zwischen der Niederdruckkammer 22 und der Führungsbohrung 50 eingearbeiteten umfänglichen Absatz 64 (siehe Fig.2) zusammen mit dem Führungsabschnitt 48 ausgebildet.

Wie weiterhin aus Fig.1 und Fig.2 ersichtlich, ist in einer Federkammer 68 des Gehäuses 12 eine Druckfeder 70, zwischen einem Teller 72 und dem Boden 74 einer aufgeschraubten Einstellkappe 76, angeordnet. Anstelle der abgebildeten Spiralfeder kann auch eine andere geeignete Druckfeder wie z.B. eine Tellerfeder verwendet werden. Der Teller 72 ist mittels einer Schulter axial verschiebbar in einer dem Einlass 14 gegenüberliegenden Bohrung 77 des Gehäuses 12 gelagert. Die Bohrung 77 und eine entsprechende Bohrung in der Einstellkappe 76 bilden die Federkammer 68, welche gegenüber der Niederdruckkammer 22 (und der Hochdruckkammer 20) abgedichtet ist. Die Druckfeder 70 ist über den Teller 72 und einen Stift 79, welcher durch die Buchse 56 geführt und im Fußbereich 38 befestigt ist, mit dem Regelkörper 30 wirkverbunden. Die Druckfeder 70 dient zur Federbelastung des Regelkörpers 30 entgegen der Einströmrichtung 23, d.h. in Öffnungsrichtung des Druckreglers 10. Durch zu- bzw. aufschrauben der Einstellkappe 76 lässt sich die Vorspannung der Druckfeder 70 stufenlos einstellen. Die Einstellkappe 76 ist mit einer Entlüftung 78 versehen, so dass sich kein Druck in der Federkammer 68 aufbauen kann, welcher einer Verschiebung des Tellers 72 entgegenwirken könnte.

Wie aus Fig.3 näher ersichtlich, erfolgt die Durchflussregelung durch axiale Verschiebung des Regelkörpers 30 zwischen den beiden in Fig.1 und Fig.2 abgebildeten Extrempositionen. Genauer gesagt wird durch diese Verschiebung der freie Strömungsquerschnitt eines ringförmigen Spalts 80, welcher den Durchgang des Druckreglers 10 definiert, eingestellt. Der Spalt 80 wird nach innen variabel begrenzt durch den Übergangsabschnitt 40 und nach außen fest begrenzt durch einen, vom Gehäuse zwischen der Hochdruckkammer 20 und der Durchgangsbohrung 24 gebildeten, sich ebenfalls stetig in Einströmrichtung verjüngenden Übergangsbereich 82. Der Übergangsbereich 82 hat eine konische, kegelstumpfförmige Oberfläche, wodurch, zusammen mit der kugelabschnittsförmigen Oberfläche des Übergangsabschnitts 40, die Wirbelbildung minimiert wird. Prinzipiell könnten beide Übergänge jedoch auch andersartig, z.B. treppenförmig, gestaltet sein.

Aus der beschriebenen Anordnung des Regelkörpers 30 und des Gehäuses 12 folgt, dass die Verringerung des Durchflusses, d.h. die Reduzierung des Spalts 80, durch Verschiebung des Regelkörpers 30 in Einströmrichtung 23 und die Erhöhung des Durchflusses durch Verschiebung des Regelkörpers 30 in entgegengesetzter Richtung erfolgt. Mit anderen Worten, die Schließrichtung des Regelkörpers 30 entspricht der Einströmrichtung 23 des am Einlass 14 einströmenden Gases.

Aus den Fig.1 und 2 und obiger Beschreibung geht hervor, dass der Druckregler 10 sitzlos ausgeführt ist. Die Regelfunktion wird dadurch erzielt, dass der des Kopfbereich 32 zwischen der Hochdruckkammer 20 und der Durchgangsbohrung 24 verstellbar ist, um den Strömungsquerschnitt des ringförmigen Spalts 80 stromaufwärts der Durchgangsbohrung 24 einzustellen. Minimaler oder kein Durchfluss wird durch Eintauchen in Einströmrichtung 23 des Kopfbereichs 32 in die Durchgangsbohrung 24 erreicht. Anhand der Radialdichtung 44, lässt sich der Durchfluss im wesentlichen vollständig absperren. Das zum Absperren bei herkömmlichen Ventilen übliche Aufliegen oder gar Aufschlagen des Ventilkörpers auf einer axial angeordneten Dichtfläche eines Ventilsitzes entfällt beim erfindungsgemäßen Druckregler 10 vollständig.

Der Druckregler 10 ist zudem so ausgestaltet, dass die Radialdichtung 44, bereits in der Durchgangsbohrung 24 abdichtet, bevor der Regelkörper 30 mit seinem Fußbereich 38 über den Kunststoffpuffer 60 am Boden 62, d.h. in seinem ersten Endanschlag anschlägt. Ein Anschlagen des Regelkörpers 30 ist somit zur Durchflussminimierung oder Durchflusssperrung im allgemeinen nicht erforderlich. Der Kunststoffpuffer 60 dient zur zusätzlichen Dämpfung einer überschüssigen Verschiebung des Regelkörpers 30 in Einströmrichtung 23, z.B. durch Massenträgheit. Weiterhin ist aus Fig.1 ersichtlich, dass die Buchse 56 einen dritten Endanschlag ausbildet an welchem der Teller 72 anschlägt zur Begrenzung des Hubs der Druckfeder 70. Hierbei sind die Buchse 56 und der Absatz 64 im Bezug auf den Regelkörper 30 derart angeordnet, dass der Teller 72 an der Buchse 56 anschlägt, bevor der Regelkörper 30 durch den Führungsabschnitt 48 am Absatz 64 anschlägt. Zusätzlich zur sitzlosen Ausführung des Druckreglers 10, werden, durch die beschriebene Anordnung der Endanschläge sowie den Kunststoffpuffer 60, harte Stöße zwischen Regelkörper 30 und Gehäuse 12 während des Regelvorgangs wirksam ausgeschlossen.

Im folgenden wird die Funktionsweise des Druckreglers 10 näher erläutert. Ganz allgemein dient der Druckregler 10 als Druckminderer mit Regelfunktion, so dass am Auslass 16 ein bestimmter einstellbarer Ausgangsdruck über die Dauer des Löschvorgangs nicht überschritten wird und beibehalten wird bis der Druck am Einlass 14 unter den Druck am Auslass 16 fällt. Nach Öffnung des Flaschenventils 17 wirkt der einlassseitige Hochdruck auf den Kopfbereich 32 in Einströmrichtung 23, d.h. in Schließrichtung. Wie aus Fig. 1-3 ersichtlich ist im Regelkörper 30 eine koaxiale, verhältnismäßig lange Drosselbohrung 84 geringen Durchmessers vorgesehen. Die Drosselbohrung 84 reicht vom einlassseitigen Ende des Kopfbereichs 32 bis zu einer Querbohrung 86 im Fußbereich 38, direkt im Anschluss an den Führungsabschnitt 48. Über die Drosselbohrung 84 und die Querbohrung 86 ist die Hochdruckkammer 20 mit einer Kammer verbunden, die im Folgenden als Ausgleichskammer 88 bezeichnet wird. Die Ausgleichskammer 88 ist einerseits fest begrenzt durch die Führungsbohrung 50 und die Buchse 56 und andererseits variabel begrenzt durch den Regelkörper 30, d.h. durch die vom Einlass 14 abgewandte und vom Fußbereich 38 hervorstehenden Fläche 89 des Führungsabschnitts 48. Durch die Verbindung zur Hochdruckkammer 20 kann sich in der Ausgleichskammer 88 der einlassseitige Hochdruck einstellen. Durch diesen Ausgleich und durch die Drosselbohrung 84 wird sichergestellt, dass eine zeitlich langsame Veränderung des Drucks in der Hochdruckkammer 20 im wesentlichen keine Verschiebung des Regelkörpers 30 bewirkt, d.h. keinen Einfluss auf den zu erzielenden, vorgegebenen niedrigeren Druck in der Niederdruckkammer 22 hat (solange ersterer letzteren nicht unterschreitet). Aufgrund der Ausgestaltung der Drosselbohrung 84, bewirken zeitlich schnelle Veränderungen des Drucks in der Hochdruckkammer 20 jedoch eine entsprechende kompensierende Verschiebung des Regelkörpers 30. Der Führungsabschnitt 48 dichtet anhand der Dichtung 52 in der ersten Führungsbohrung 50 eine Querschnittsfläche S1 ab (siehe Fig.2). Führungsabschnitt 48 und Dichtung 52 liegen in Einströmrichtung 23 hinter der Niederdruckkammer 22 und dichten somit die Ausgleichskammer 88 gegenüber der Niederdruckkammer 22 ab. Der Fußbereich 38 dichtet anhand der Dichtung 58 in der zweiten Führungsbohrung 54 eine Querschnittsfläche S2 ab (siehe Fig.2). Fußbereich 38 und Dichtung 58 liegen in Einströmrichtung 23 hinter der Ausgleichskammer 88 und dichten letztere zur Federkammer 68, d.h. zur Atmosphäre, hin ab. Bezüglich der Querschnittflächen S1 und S2 gilt nun zu beachten, dass beide so gewählt sind, dass die Querschnittsfläche S0 (siehe Fig.2), welche der eingetauchte Kopfbereich 32 in der Durchgangsbohrung 24 abdichtet, im wesentlichen gleich S1-S2 ist. Mit anderen Worten, die ringförmige Fläche 89 ist im wesentlichen gleich groß wie die Querschnittsfläche der Durchgangsbohrung 24. Hierdurch sind die mit Hochdruck aus der Hochdruckkammer 20 beaufschlagten Flächen des Regelkörpers 30 in Einströmrichtung 23 und gegen die Einströmrichtung 23 präzise ausgeglichen.

Weiterhin sollte angemerkt werden, dass die mit dem einlassseitigen Hochdruck beaufschlagte Ausgleichskammer 88 auch als Dämpfungskammer dient, d.h. zusätzlich als Gasdruckdämpfer auf die Verschiebung des Regelkörpers 30 in bzw. gegen die Einströmrichtung 23 wirkt. Durch die Ausgleichskammer 88 werden somit unerwünschte Schwingungen, insbesondere Resonanzschwingungen, des Regelkörpers 30 vermieden.

Neben seiner Funktion als Stellorgan zur Einstellung des Strömungsquerschnitts, wirkt der Regelkörper 30 zugleich zusammen mit der Druckfeder 70 als mechanischer Drucksensor. Der Regelkörper 30 weist am Führungsabschnitt 48 hinter der Niederdruckkammer 22 eine größere abgedichtete Querschnittsfläche S1 auf als die mögliche abgedichtete Querschnittsfläche S0 in der Durchgangsbohrung 24. Dadurch erzeugt der Druck in der Niederdruckkammer 22 eine resultierende Kraft in Einströmrichtung 23, d.h. in Schließrichtung des Druckreglers 10, auf den Regelkörper 30, welcher bezüglich Hochdruck ausgeglichen ist. Diese Kraft in Schließrichtung wirkt der Federkraft entgegen, welche die Druckfeder 70 auf den Regelkörper 30 ausübt. Wenn der Druck in der Niederdruckkammer 22 fällt, wird die Federkraft überwiegen und den Regelkörper 30 gegen die Einströmrichtung 23 in eine Stellung mit größerem Durchfluss verschieben. Bei vergrößertem Durchfluss steigt der Druck in der Niederdruckkammer 22. Bei steigendem Druck in der Niederdruckkammer 22 wird die durch diesen Druck ausgeübte Kraft gegenüber der Federkraft überwiegen und den Regelkörper 30 wiederum in eine Stellung mit geringerem Durchfluss verschieben. Bei verringertem Durchfluss fällt der Druck in der Niederdruckkammer 22. Dieser Einpendelvorgang währt an, bis ein Gleichgewichtszustand zwischen beiden Kräften erreicht ist, und somit ein konstanter Druck, welcher mittels der Einstellkappe 76 einstellbar ist, in der Niederdruckkammer 22 und am Auslass 16 herrscht. Hierdurch gewährleistet der Druckregler 10 ein Herabsetzen des einlassseitigen Hochdrucks in der Hochdruckkammer 20 auf einen benutzerdefinierten niedrigeren Druck in der Niederdruckkammer 22. Neben dem Freiheitsgrad in Rotation besitzt der Regelkörper 30 auch in eingetauchter Stellung, d.h. bei minimalem oder keinem Durchfluss, noch einen Freiheitsgrad in axialer Richtung. Durch die sitzlose Ausführung des Druckreglers 10 sowie die Anordnung der jeweiligen Endanschläge werden harte inelastische Stöße durch den Regelkörper 30 verhindert, da keine axial angeordnete, als Anschlag wirkende Sitzfläche vorliegt. Hieraus ergibt sich eine sprungfreie und gleichmäßigere Regelfunktion als bei bekannten Druckreglern für Hochdruckgas. Zudem bieten die verschiedenen Gestaltungsmöglichkeiten und deren Einfluss auf die Parameter: statische und dynamische Druckkräfte (Flächen S0, S1, S2; Form des Regelkörpers 30), Federkraft (Druckfeder 70), Strömungskräfte (Form des Regelkörpers 30 insbesondere des Kopfabschnitts 32), eine große Flexibilität die Kennlinie des Druckreglers anzupassen je nach Einlass-Druck und/oder Auslass-Druck, Gasart oder Anwendung.

Abgesehen vom erfindungsgemäßen Druckregler 10 gehören Feuerlöschsysteme, für welche der Druckregler 10 geeignet ist, zum Stand der Technik und werden daher hier nicht näher erläutert. Es soll lediglich angemerkt werden, dass der Druckregler 10 ohne weiteres mit seinem Einlass 14 an verschiedenste herkömmliche Ventile wie z.B. Flaschenventile von Druckgasflaschen, welche das Löschgas unter Hochdruck speichern, angeschlossen werden kann. Die Löschgasleitung wiederum lässt sich ohne weiteres an den Auslass 16 anschließen. Schließlich bleibt noch anzumerken, dass der Druckregler 10 auch für andere Anwendungen geeignet ist, welche eine erhebliche Druckreduzierung eines Gases von beispielsweise 200-300bar auf 30-50bar erfordern.

Abschließend sollten noch einige besondere Aspekte und Vorteile der Ausgestaltung des Druckreglers 10 hervorgehoben werden:
- Bei herkömmlichen Druckreglern mit axial angeordnetem Ventilsitz lässt sich die am Sitz abgedichtete Fläche im allgemeinen nicht genau bestimmen, bedingt unter anderem durch Ungenauigkeiten bzw. Druckverformung der Sitzdichtung. Beim erfindungsgemäßen Druckregler 10 ist dieser Ungenauigkeitsfaktor eliminiert, so dass ein präziserer Druckausgleich (S2-S1=S0) des Regelkörpers 30 bezüglich einlassseitigem Hochdruck ermöglicht wird. Die bei eingetauchtem Regelkörper 30 abgedichtete Fläche S0 ist konstant und, unabhängig von der Radialdichtung 44, durch die Durchgangsbohrung 24 genau definierbar.

- Beim erfindungsgemäßen Druckregler 10 wird eine erhöhte Betriebssicherheit dadurch erreicht, dass sich der Regelkörper 30 zur Vergrößerung des Durchgangs (Spalt 80) stets entgegen der Einwirkung des einströmenden Gases (d.h. in Einströmrichtung 23) verschieben muss und somit ein ungewollter schlagartiger Druckanstieg am Auslass 16 ausgeschlossen ist.
- Im Gegensatz zu der Lösung aus der WO 2004/079678, besitzt der Druckregler 10 keine eigentliche Flaschenventil-Funktion, sondern dient lediglich dem automatischen und geregelten Druckreduzieren und kann daher als Druckminderer bezeichnet werden. Der Druckregler 10 kann als separater Druckminderer an herkömmliche Flaschenventile angeschlossen werden.
- Der Anwender profitiert weiterhin von der kompakten Bauweise herkömmlicher Flaschenventile und kann beispielsweise handelsübliche Ventilschutzkappen weiterverwenden.
- Der Druckregler 10 kann mit verschiedensten bestehenden (Flaschen-) Ventilkonzepten verwendet werden.
- Zusätzliche Flexibilität wird dadurch erreicht, dass Ausführungen mit oder ohne Druckregler 10 auf der gleichen (Flaschen-)Ventiltechnik beruhen können.
- Die Handhabung des Druckreglers 10, insbesondere Montage und Demontage sind einfach und erfordern keine besonderen Maßnahmen.

## Patentansprüche

1. Feuerlöschsystem mit unter Hochdruck gespeichertem Löschgas umfassend:
ein Gasflaschenventil (17) an einer Druckgasflasche, welche das Löschgas unter Hochdruck speichert, und
einen Druckregler (10) für Hochdruckgas, welcher als separates Bauteil am Auslass des Gasflaschenventils (17) angeschlossen ist, umfassend
ein Gehäuse (12) mit einer mit einem Einlass (14) verbundenen Hochdruckkammer (20) und einer mit einem Auslass (16) verbundenen Niederdruckkammer (22), wobei das Hochdruckgas beim Einströmen durch den Einlass in die Hochdruckkammer eine Einströmrichtung festlegt;
eine zylindrische Durchgangsbohrung (24), welche die Hochdruckkammer (20) mit der Niederdruckkammer (22) verbindet und bezüglich der Hochdruckkammer verengt ist; und
einen federbelasteten Regelkörper (30), welcher im Gehäuse axial verschiebbar gelagert ist und einen Kopfbereich (32) mit größerem Querschnitt und einen Halsbereich (34) mit kleinerem Querschnitt aufweist; wobei der Druckregler (10) sitzlos ausgeführt ist und die Regelfunktion dadurch erzielt wird, dass der Kopfbereich (32) zwischen Hochdruckkammer (20) und Durchgangsbohrung (24) verstellbar ist, um den Strömungsquerschnitt im Übergangsbereich zwischen Hochdruckkammer (20) und Durchgangsbohrung (24) einzustellen, wobei minimaler oder kein Durchfluss durch Eintauchen des Kopfbereichs (32) in die Durchgangsbohrung (24) in Einströmrichtung erreicht wird.

2. Feuerlöschsystem nach Anspruch 1, weiterhin umfassend einen ersten Endanschlag (62), welcher dem Regelkörper (30) zwecks Begrenzung seiner Verschiebung in Einströmrichtung derart zugeordnet ist, dass der Kopfbereich (32) zumindest teilweise in die Durchgangsbohrung eingetaucht ist bevor der Regelkörper am ersten Endanschlag (62) anschlägt.

3. Feuerlöschsystem nach Anspruch 1 oder 2, wobei der Querschnitt des Kopfabschnitts so gewählt ist, dass dieser ein Eintauchen des Kopfbereichs (32) in die Durchgangsbohrung (24) mit geringem Radialspiel gewährleistet.

4. Feuerlöschsystem nach Anspruch 3, weiterhin umfassend eine am Kopfbereich (32) umfänglich angeordnete Radialdichtung (44), welche bei eingetauchtem Kopfabschnitt das Radialspiel in der Durchgangsbohrung (24) abdichtet.

5. Feuerlöschsystem nach Anspruch 4, wobei die Radialdichtung (44) als Formdichtung ausgestaltet ist, welche formschlüssig in einer entsprechenden Aussparung im Kopfbereich (32) gesichert ist

6. Feuerlöschsystem nach einem der voranstehenden Ansprüche, weiterhin umfassend:
eine Ausgleichskammer (88) welche axial vom Regelköper (30) durchquert wird; und
eine Drosselbohrung (84) welche die Ausgleichskammer (88) mit der Hochdruckkammer (20) verbindet.

7. Feuerlöschsystem nach Anspruch 6, weiterhin umfassend:
eine erste Führungsbohrung (50) in welcher der Regelköper (30) hinter der Niederdruckkammer (22) radial zur Ausgleichskammer (88) abgedichtet ist und eine abgedichtete Querschnittsfläche S1 aufweist,
eine zweite Führungsbohrung (54) in welcher der Regelköper (30) hinter der Ausgleichskammer (88) radial zur Atmosphäre hin abgedichtet ist und eine abgedichtete Querschnittsfläche S2 aufweist, welche kleiner als S1 ist.

8. Feuerlöschsystem nach Anspruch 7, wobei der Kopfbereich (32) in der Durchgangsbohrung (24) eine Querschnittsfläche S0 abdichtet und S0 im wesentlichen gleich S1-S2 ist.

9. Feuerlöschsystem nach einem der voranstehenden Ansprüche, weiterhin umfassend:
eine Druckfeder (70), vorzugsweise eine Spiral- oder Tellerfeder, welche den Regelkörper (30) gegen die Einströmrichtung federbelastet; und
eine gegenüber der Hochdruckkammer (20) und der Niederdruckkammer (22) abgedichtete und zur Atmosphäre offene Federkammer (68) in welcher die Druckfeder (70) gelagert ist.

10. Feuerlöschsystem nach Anspruch 9, weiterhin umfassend:
einen zweiten Endanschlag (64), welcher dem Regelkörper (30) zwecks Begrenzung seiner Verschiebung gegen die Einströmrichtung zugeordnet ist;
einen zwischen der Druckfeder (70) und dem Regelkörper (30) angeordneten, in der Federkammer (68) axial verschiebbar gelagerten Teller (72); sowie
einen dritten Endanschlag (56), weicher dem Teller (72) zwecks Begrenzung des Hubs der Druckfeder (70) derart zugeordnet ist, dass der Teller (72) am dritten Endanschlag (56) anschlägt bevor der Regelkörper (30) am zweiten Endanschlag (64) anschlägt.

11. Feuerlöschsystem nach einem der voranstehenden Ansprüche, wobei der Übergangsbereich (82) zwischen Hochdruckkammer (20) und Durchgangsbohrung (24) sich, vorzugsweise konisch, zur Durchgangsbohrung hin stetig verjüngt.

12. Feuerlöschsystem nach einem der voranstehenden Ansprüche, wobei der Kopfbereich (32) zum Halsbereich (34) hin einen, vorzugsweise kugelabschnittsförmigen, Übergangsabschnitt (40) aufweist, dessen Querschnitt sich zum Halsbereich hin stetig verjüngt.

13. Feuerlöschsystem nach einem der Ansprüche 2 bis 12, weiterhin umfassend einen Kunststoffpuffer (60), welcher zur Dämpfung zwischen dem Regelkörper (30) und dem ersten Endanschlag (62) angeordnet ist.

14. Feuerlöschsystem nach einem der voranstehenden Ansprüche, weiterhin umfassend eine Einstellvorrichtung (76) zur Einstellung der Vorspannung auf den federbelasteten Regelkörper (30).

15. Feuerlöschsystem nach einem der voranstehenden Ansprüche, wobei der Regelkörper (30) in Einströmrichtung von einer ersten Extremposition (FIG.1) für maximalen Durchfluss, in welcher sich der Kopfabschnitt (32) in der Hochdruckkammer (20) befindet, in eine zweite Extremposition (FIG.2) für minimalen Durchfluss, in welcher der Kopfabschnitt (32) in die Durchgangsbohrung (24) eingetaucht ist, verschiebbar ist

16. Feuerlöschsystem nach einem der voranstehenden Ansprüche, weiterhin umfassend einen Auslöser, welcher an das Gasflaschenventil (17) angeschlossen ist.

17. Feuerlöschsystem nach einem der voranstehenden Ansprüche, weiterhin umfassend eine Löschgasleitung, welche am Auslass (16) des Druckreglers (10) angeschlossen ist.

## Claims

1. A fire extinguishing system with extinguishing gas stored under high pressure, comprising: a gas cylinder valve (17) on a pressurised gas cylinder, which stores the extinguishing gas under high pressure, and
a pressure regulator (10) for high pressure gas, which is connected as a separate component to the outlet of the gas cylinder valve (17), comprising
a housing (12) with a high pressure chamber (20) connected to an inlet (14) and a low pressure chamber (22) connected to an outlet (16), wherein the high pressure gas establishes an inflow direction when it flows through the inlet into the high pressure chamber; a cylindrical through-hole (24), which connects the high pressure chamber (20) to the low pressure chamber (22) and is narrower than the high pressure chamber; and
a spring-loaded regulating member (30), which is mounted axially displaceably in the housing and comprises a head region (32) of larger cross-section and a neck region (34) of smaller cross-section; wherein the pressure regulator (10) is of seatless configuration and the regulating function is achieved in that the head region (32) is adjustable between high pressure chamber (20) and through-hole (24) in order to adjust the flow cross-section in the transitional region between high pressure chamber (20) and through-hole (24), wherein minimal or no through-flow is achieved by introducing the head region (32) into the through-hole (24) in the inflow direction.

2. A fire extinguishing system according to claim 1, further comprising a first end stop (62), which is associated with the control member (30) for the purpose of limiting displacement thereof in the inflow direction in such a way that the head region (32) has been introduced at least in part into the through-hole before the control member strikes against the first end stop (62).

3. A fire extinguishing system according to claim 1 or claim 2, wherein the cross-section of the head portion is selected such that it ensures introduction of the head region (32) into the through-hole (24) with slight radial play.

4. A fire extinguishing system according to claim 3, further comprising a radial seal (44) arranged circumferentially on the head region (32), which radial seal seals off the radial play in the through-hole (24) when the head portion has been introduced therein.

5. A fire extinguishing system according to claim 4, wherein the radial seal (44) takes the form of a moulded seal, which is secured in form-fitting manner in a corresponding recess in the head region (32).

6. A fire extinguishing system according to one of the preceding claims, further comprising:
an equalizing chamber (88) through which the control member (30) passes axially; and
a throttling port (84), which connects the equalizing chamber (88) with the high pressure chamber (20).

7. A fire extinguishing system according to claim 6, further comprising
a first guide bore (50), in which the control member (30) is sealed downstream of the low pressure chamber (22) radially relative to the equalizing chamber (88) and has a sealed cross-sectional area S1,
a second guide bore (54), in which the control member (30) is sealed downstream of the equalizing chamber (88) radially relative to the atmosphere and has a sealed cross-sectional area S2 which is smaller than S1.

8. A fire extinguishing system according to claim 7, wherein the head region (32) seals off a cross-sectional area SO in the through-hole (24), SO being substantially equal to S1-S2.

9. A fire extinguishing system according to one of the preceding claims, further comprising:
a compression spring (70), preferably a spiral or disk spring, which spring-loads the control member (30) against the inflow direction; and a spring chamber (68) sealed relative to the high pressure chamber (20) and the low pressure chamber (22) and open to the atmosphere, in which spring chamber the compression spring (70) is mounted.

10. A fire extinguishing system according to claim 9, further comprising a second end stop (64), which is associated with the control member (30) for the purpose of limiting displacement thereof against the inflow direction; a disk (72) arranged between the compression spring (70) and the control member (30) and mounted axially displaceably in the spring chamber (68); and a third end stop (56), which is associated in such a way with the disk (72) for the purpose of limiting the stroke of the compression spring (70) that the disk (72) strikes against the third end stop (56) before the control member (30) strikes against the second end stop (64).

11. A fire extinguishing system according to one of the preceding claims, wherein the transitional region (82) between high pressure chamber (20) and through-hole (24) tapers steadily, preferably conically, towards the through-hole.

12. A fire extinguishing system according to one of the preceding claims, wherein towards the neck region (34) the head region (32) comprises a transitional portion (40) which preferably takes the form of a portion of a sphere and the cross-section of which tapers steadily towards the neck region.

13. A fire extinguishing system according to one of claims 2 to 12, further comprising a plastics buffer (60), which is arranged for damping between the control member (30) and the first end stop (62).

14. A fire extinguishing system according to one of the preceding claims, further comprising an adjusting device (76) for adjusting the pretension on the spring-loaded control member (30).

15. A fire extinguishing system according to one of the preceding claims, wherein the control member (30) is displaceable in the inflow direction from a first end position (Figure 1) for maximum through-flow, in which the head portion (32) is located in the high pressure chamber (20), into a second end position (Figure 2) for minimum through-flow, in which the head portion (32) has been introduced into the through-hole (24).

16. A fire extinguishing system according to one of the preceding claims, further comprising a tripping device, which is connected to the gas cylinder valve (17).

17. A fire extinguishing system according to one of the preceding claims, further comprising an extinguishing gas line, which is connected to the outlet (16) of the pressure regulator (10).

## Revendications

1. Système d'extinction d'incendie avec du gaz d'extinction stocké sous haute pression comprenant :
une valve (17) de bouteille de gaz, montée sur une bouteille de gaz comprimé qui conserve le gaz d'extinction sous haute pression, et
un régulateur de pression (10) pour gaz haute pression, raccordé en tant que pièce séparée à la sortie de la valve (17) de bouteille de gaz, comprenant :
un boîtier (12) avec une chambre haute pression (20) reliée à une admission (14) et une chambre basse pression (22) reliée à une sortie (16), le gaz haute pression définissant un sens d'écoulement lorsqu'il entre dans la chambre haute pression (20) par l'admission ;
un trou débouchant (24) cylindrique, qui fait communiquer la chambre haute pression (20) avec la chambre basse pression (22) et qui est rétréci par rapport à la chambre haute pression ; et
un corps régulateur (30) sollicité par ressort, logé de manière axialement déplaçable dans le boîtier et présentant une partie tête (32) de section transversale plus grande et une partie col (34) de section transversale plus petite ;
le régulateur de pression (10) étant réalisé sans siège et la fonction de régulation étant obtenue par le fait que la partie tête (32) entre la chambre haute pression (20) et le trou débouchant (24) est ajustable afin de régler la section d'écoulement dans la zone de transition entre chambre haute pression (20) et trou débouchant (24), un débit minimal ou pas de débit du tout étant obtenu en faisant plonger la partie tête (32) dans le trou débouchant (24) dans le sens d'écoulement.

2. Système d'extinction d'incendie selon la revendication 1, comprenant en outre une première butée de fin de course (62), associée au corps régulateur (30), afin de limiter son déplacement dans le sens d'écoulement, de telle sorte que la partie tête (32) se trouve plongée au moins partiellement dans le trou débouchant avant que le corps régulateur ne vienne buter contre la première butée de fin de course (62).

3. Système d'extinction d'incendie selon la revendication 1 ou 2, la section transversale de la partie tête (32) étant telle qu'elle assure une plongée de la partie tête (32) dans le trou débouchant (24) avec un faible jeu radial.

4. Système d'extinction d'incendie selon la revendication 3, comprenant en outre un joint radial (44) disposé circonférentiellement sur la partie tête (32), qui rend étanche le jeu radial dans le trou débouchant (24) lorsque la partie tête (32) est plongée dedans.

5. Système d'extinction d'incendie selon la revendication 4, le joint radial (44) étant réalisé sous forme de joint moulé, bloqué par complémentarité de forme dans un évidement correspondant ménagé dans la partie tête (32).

6. Système d'extinction d'incendie selon l'une des revendications précédentes, comprenant en outre :
une chambre d'équilibrage (88), traversée axialement par le corps régulateur (30) ; et
un orifice d'étranglement (84), faisant communiquer la chambre d'équilibrage (88) avec la chambre haute pression (20).

7. Système d'extinction d'incendie selon la revendication 6, comprenant en outre :
un premier trou de guidage (50), dans lequel le corps régulateur (30), derrière la chambre basse pression (22), est rendu étanche radialement par rapport à la chambre d'équilibrage (88) et présente une superficie de section transversale S1 rendue étanche ;
un deuxième trou de guidage (54), dans lequel le corps régulateur (30), derrière la chambre d'équilibrage (88), est rendu étanche radialement vers l'atmosphère et présente une superficie de section transversale S2 rendue étanche, inférieure à S1.

8. Système d'extinction d'incendie selon la revendication 7, la partie tête (32) dans le trou débouchant (24) rendant étanche une superficie de section transversale S0, S0 étant sensiblement égale à S1-S2.

9. Système d'extinction d'incendie selon l'une des revendications précédentes, comprenant en outre :
un ressort de pression (70), de préférence un ressort spiral ou à disque, sollicitant élastiquement le corps régulateur (30) dans le sens opposé au sens d'écoulement ; et
une chambre à ressort (68), rendue étanche par rapport à la chambre haute pression (20) et la chambre basse pression (22) et ouverte vers l'atmosphère, dans laquelle le ressort de pression (70) est logé.

10. Système d'extinction d'incendie selon la revendication 9, comprenant en outre :
une deuxième butée de fin de course (64), associée au corps régulateur (30) afin de limiter son déplacement dans le sens opposé au sens d'écoulement ;
un disque (72) disposé entre le ressort de pression (70) et le corps régulateur (30) et logé de manière axialement déplaçable dans la chambre à ressort (68) ; ainsi que
une troisième butée de fin de course (56), associée au disque (72), afin de limiter la course du ressort de pression (70), de telle sorte que le disque (72) vient buter contre la troisième butée de fin de course (56) avant que le corps régulateur (30) ne vienne buter contre la deuxième butée de fin de course (64).

11. Système d'extinction d'incendie selon l'une des revendications précédentes, la zone de transition (82) entre chambre haute pression (20) et trou débouchant (24) se rétrécissant continûment, de préférence de façon conique, en direction du trou débouchant.

12. Système d'extinction d'incendie selon l'une des revendications précédentes, la partie tête (32) présentant en direction de la partie col (34) une portion de transition (40), de préférence en forme de segment sphérique, dont la section transversale diminue continûment en direction de la partie col (34).

13. Système d'extinction d'incendie selon l'une des revendications 2 à 12, comprenant en outre un tampon en plastique (60), disposé entre le corps régulateur (30) et la première butée de fin de course (62) pour assurer l'amortissement.

14. Système d'extinction d'incendie selon l'une des revendications précédentes, comprenant en outre un dispositif de réglage (76) pour régler la précontrainte sur le corps régulateur (70) sollicité par ressort.

15. Système d'extinction d'incendie selon l'une des revendications précédentes, le corps régulateur (30) pouvant être déplacé, dans le sens d'écoulement, d'une première position extrême (FIG. 1) de débit maximal, dans laquelle la partie tête (32) se trouve dans la chambre haute pression (20), dans une deuxième position extrême (FIG. 2) de débit minimal, dans laquelle la partie tête (32) est plongée dans le trou débouchant (24).

16. Système d'extinction d'incendie selon l'une des revendications précédentes, comprenant en outre un déclencheur, raccordé à la valve (17) de bouteille de gaz.

17. Système d'extinction d'incendie selon l'une des revendications précédentes, comprenant en outre une conduite de gaz d'extinction, raccordée à la sortie (16) du régulateur de pression (10).
